(19) Europäisches Patentamt
European Patent Office
Office européen des brevets

(11) Veröffentlichungsnummer: **0 008 407**
**B1**

(12) # EUROPÄISCHE PATENTSCHRIFT

(45) Veröffentlichungstag der Patentschrift: **26.10.83**

(51) Int. Cl.$^3$: **B 01 J 31/06**, C 07 B 1/00

(21) Anmeldenummer: **79102868.1**

(22) Anmeldetag: **08.08.79**

(54) **Polymere Hydrierkatalysatoren, Verfahren zur Herstellung dieser Katalysatoren und ihre Verwendung für katalytische Hydrierungen.**

(30) Priorität: **17.08.78 DE 2835943**
**10.05.79 DE 2918942**

(43) Veröffentlichungstag der Anmeldung:
**05.03.80 Patentblatt 80/5**

(45) Bekanntmachung des Hinweises auf die Patenterteilung:
**26.10.83 Patentblatt 83/43**

(84) Benannte Vertragsstaaten:
**AT BE CH DE FR GB IT LU NL SE**

(56) Entgegenhaltungen:
**DE - A - 2 326 489**

(73) Patentinhaber: **Heyl Chemisch-pharmazeutische Fabrik GmbH & Co. KG**
**Goerzallee 253**
**D-1000 Berlin 37 (DE)**

(72) Erfinder: **Bayer, Ernst, Prof. Dr.**
**Bei der Ochsenweide 17**
**D-7400 Tübingen (DE)**
Erfinder: **Schumann, Wilhelm, Dipl.-Chem.**
**Berghof Hs. Sonnenhalde**
**D-7400 Tübingen (DE)**

(74) Vertreter: **Kinzebach, Werner, Dr.**
**Patentanwälte Reitstötter, J., Prof.Dr.Dr.; Kinzebach, W., Dr.; Höller, K.P., Dr.; Bauerstrasse 22 P.O. Box 780**
**D-8000 München 43 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 008 407 B1

Polymere Hydrierkatalysatoren, Verfahren zur Herstellung dieser Katalysatoren und ihre Verwendung für katalytische Hydrierungen

Die Erfindung betrifft polymere in Wasser, Methanol, Äthanol, Propanol, N-Methyl-pyrrolidon und deren Mischungen lösliche Hydrierkatalysatoren, ein Verfahren zur Herstellung dieser Katalysatoren und ihre Verwendung für katalytische Hydrierungen. Diese können unter homogener Reaktionsführung durchgeführt werden.

Hydrierungen mit niedermolekularen Metallkatalysatoren in homogener Lösung haben im Laboratorium und in der Technik kaum Anwendung gefunden, da große Probleme bei der Abtrennung von Reaktionsprodukt und Katalysator auftreten. Man hat daher versucht, niedermolekulare homogene Katalysatoren an Polymere mit Phosphingruppen zu binden. Bei der Anwendung unlöslicher Polymerer tritt hierbei Heterogenisierung auf. Diese Polymerkomplexe mit Triphenylphosphingruppen weisen teilweise schlechtere Selektivitäten und Stabilitäten wie die niedermolekularen Komplexe auf.

Die DE—OS—2 326 489 beschreibt ein Verfahren zur Katalyse chemischer Reaktionen, wobei als Katalysatoren in den Reaktionsmedien lösliche, synthetische hochmolekulare Metallverbindungen unter anderem auf der Basis von Polyvinylalkoholen, Polyvinyläthern, Polyvinylaminen, Polyvinylestern, Polyvinylpyrolidonen usw. benützt werden. Die beanspruchten Katalysatoren unterscheiden sich jedoch in erfinderischer Weise sowohl in Bezug auf die eingesetzten Basispolymere als auch bezüglich deren Funktionalisierung.

Aufgabe der vorliegenden Erfindung ist die Schaffung neuer polymerer Hydrierkatalysatoren, die in üblichen Hydrierlösungsmitteln löslich sind, die schneller und selektiver hydrieren als die bekannten Katalysatoren, leicht vom Produkt abtrennbar sind und lange voll gebrauchsfähig bleiben.

Überraschenderweise wurden nun neue in Wasser, Methanol, Äthanol, Propanol, N-Methylpyrrolidon und deren Mischungen lösliche, polymere Hydrierkatalysatoren gefunden, die dadurch gekennzeichnet sind, daß Metalle der 8. Nebengruppe des Periodensystems der Elemente als Metall oder Metallsalz an Polyvinylalkohol mit einem Molekulargewicht von 72 000, Polyvinylpyrrolidon mit einem Molekulargewicht von 200 000, Polyacrylnitril, Carboxymethylcellulose, Polyvinylpyridin und/oder Mischungen davon kovalent und/oder nebenvalent gebunden sind. Je nach der Grundstruktur des Polymers erhält man in den für die Hydrierung gebräuchlichen Lösungsmitteln lösliche Hydrierkatalysatoren.

Die erfindungsgemäßen polymeren Hydrierkatalysatoren können von niedermolekularen Ausgangs- und Reaktionsprodukten nach üblichen Verfahren der Fällung, Destillation und Extraktion, aber auch aufgrund der Molekulargewichtsunterschiede durch Diafiltration und Gelchromatographie abgetrennt werden. Hierdurch werden die Trennprobleme unter Bewahrung der Vorteile homogener Reaktionsführung vereinfacht.

Die Molekulargewichte der Polymeren können in weiten Grenzen schwanken, z. B. zwischen etwa 1000 und 1 Million; vorteilhaft liegen sie zwischen etwa 5000 und 100 000.

Die Beladung der Polymere mit Metallen bzw. Metallionen schwankt in weitem Bereich. Es hat sich als zweckmäßig erwiesen 0,1 bis 10% Metall an das Polymer zu binden. Höhere Beladungen bringen in der Regel keine schnelleren Hydrierungen.

Erfindungsgemäß können am Metall oder Metallion neben der polymeren Komponente noch weitere niedermolekulare Liganden koordinativ oder salzartig gebunden sein, z. B. Phosphine, wie Triphenylphosphin; Kohlenmonoxid; Halogenide, insbesondere Chlorid; Cyanid; Nitrile; Alkene; Alkine, vorteilhaft Acetylen, Cyclopentadienig-Anionen, Amine, Aminosäuren und/oder Phosphorylide.

Als polymere Komponente enthält der erfindungsgemäße Katalysator Polyvinylalkohol mit einem Mol. Gew. von 72 000, Polyvinylpyrrolidon mit einem Molekulargewicht von 200 000, Polyacrylnitril, Carboxymethylcellulose, Polyvinylpyridin und/oder deren Mischungen.

Die bevorzugte polymere Komponente ist das Polyvinylpyrrolidon.

Besonders bevorzugte erfindungsgemäße Hydrierkatalysatoren sind diejenigen, in denen ein Metall oder Metallsalz der 8. Nebengruppe des Periodensystems der Elemente, vorzugsweise metallisches Palladium oder ein Palladiumsalz, kovalent und/oder nebenvalent an lösliche, synthetische oder halbsynthetische Polymere gebunden ist, wobei zusätzlich mindestens ein niedermolekularer Ligand an das Metall gebunden ist. Diese bevorzugten Hydrierkatalysatoren können die nachfolgenden niedermolekularen Liganden aufweisen:

(a) Amine,
(b) Aminosäuren,
(c) Nitrile der allgemeinen Formel I:

$$R—(CHR^1)_n—CN \qquad (I)$$

worin R einen Phenyl-, Naphthyl-, Anthracenyl- oder Phenanthrenylrest darstellt, die durch einen oder mehrere lineare oder verzweigte $C_1$ bis $C_6$-Alkylreste substituiert sein können, oder worin R für einen linearen oder verzweiten $C_1$ bis $C_6$-Alkylrest steht, $R^1$ Wasserstoff oder einen linearen oder verzweigten $C_1$ bis $C_6$-Alkylrest darstellt und n die Bedeutungen 0, 1 oder 2 bestizt;

(d) Phosphine der allgemeinen Formel II:

$$P(R^2)_3 \qquad (II)$$

worin die Reste $R^2$ gleich oder verschieden sein können und jeweils lineare oder verzweigte $C_1$ bis $C_6$-Alkylreste, Phenyl oder durch eine oder mehrere lineare oder verzweigte $C_1$ bis $C_6$-Alkylreste, $C_1$ bis $C_6$-Alkoxyreste substituiertes Phenyl bedeuten, einschließlich des unsubstituierten Triphenylphosphins;

(e) Olefine oder Alkine, einschließlich cyclischer Olefine und Alkine; oder

(f) Phosphorylide.

Besonders vorteilhafte niedermolekulare Liganden des genannten Typs sind die folgenden:

(a) Amine des folgenden Typs: primäre, sekundäre und tertiäre Amine mit raumerfüllenden aliphatischen, alicyclischen und aromatischen Substituenten, insbesondere mit verzweigten aliphatischen Gruppen mit 4 bis 16 Kohlenstoffatomen, beispielsweise mit Isopropyl-, tert.-Butyl- und Neopentylresten;

(b) Amine mit alicyclischen Resten, beispielsweise Cyclopentyl-, Cyclohexyl- und Adamantylresten;

(c) araliphatische Amine, deren Alkylrest 1 bis 6 Kohlenstoffatome enthält und die an der aliphatischen Kette mindestens einen aromatischen Rest, insbesondere mindestens einen Phenylkern und/oder mindestens einen Naphthyl-, Anthracenyl- oder Phenanthrenylrest enthalten. Besonders bevorzugte Liganden dieser Art sind Phenyläthylamine, insbesondere 1-Phenyläthylamin, Diphenyläthylamine, insbesondere 1,1-Diphenyläthylamin und Phenylpropylamine. Bei den araliphatischen Aminen der vorbezeichneten Art befindet sich die raumerfüllende Gruppe, insbesondere der aromatische Rest, vorzugsweise in 1 oder 2-Stellung zur Aminogruppe an der aliphatischen Kette.

Als Nitrilliganden der vorstehenden allgemeinen Formel I sind insbesondere diejenigen geeignet, bei denen die Cyanogruppe unmittelbar an das aromatische System, insbesondere den Phenyl-, Naphthyl-, Anthracenyl- oder Phenanthrenylrest gebunden ist. Bei dieser Konfiguration kann die Cyanogruppe an einer beliebigen Position der genannten Reste angeordnet sein. Die aromatischen Reste können auch ein- oder mehrfach durch kurzkettige, aliphatische, verzweigte oder unverzweigte Reste, insbesondere durch $C_1$ bis $C_6$-Alkylreste, substituiert sein. Insbesondere kann es sich hierbei um sterisch aufwendigere Alkylreste, beispielsweise um tert.-Butyl, Amyl, Neopentyl, handeln.

Geeignete Nitrile sind auch solche, bei denen die Cyanogruppe durch ein oder zwei Kohlenstoffatome von den genannten aromatischen Resten getrennt ist. Diese alkylenverbrückten Nitrile können am Kohlenstoffatom 1 einen verzweigten oder unverzweigten $C_1$ bis $C_6$-Alkylrest, beispielsweise einen Methyl-, Äthyl-, n-Propyl-, Isopropyl-, n-Butyl-, sek.-Butyl-, tert.-Butyl-, Amyl-, Neopentyl- oder Hexylrest, aufweisen.

Geeignete Aminosäuren sind solche mit raumerfüllenden Gruppen in 1 bis 3-Stellung zur Aminogruppe. Vorteilhafte Vertreter dieser Art sind z.B. Diphenylglycin, Norleucin, Leucin, Isoleucin, tert.-Leucin, Valin, und dergleichen.

Geeignete Phosphinliganden sind beispielsweise Arylphosphine, die auch am Arylkern, insbesondere am Phenylkern, durch eine oder mehrere Niedrigalkoxygruppen oder Niedrigalkylreste substituiert sein können. Besonders geeignet und bevorzugt ist Triphenylphosphin und Triphenylphosphin in seiner an den Phenylkernen mit den vorbezeichneten Gruppen substituierten Form.

Geeignete Olefine können beispielsweise cis- oder trans-Monoolefine mit 2 bis 12 Kohlenstoffatomen sein, deren Kohlenstoffkette durch andere Gruppen substituiert sein kann, beispielsweise durch Alkylreste mit 1 bis 6 Kohlenstoffatomen, Halogene, beispielsweise F, Cl, Br, J, Cyanogruppen, Carbonylgruppen, Carboxylgruppen, Aminogruppen, Amidogruppen, und dergleichen. Beispiele für geeignete Olefine sind: Äthylen, Propylen, n-Buten(1), n-Buten(2), n-Penten(1), n-Penten(2), n-Penten(3), n-Hexen(1), n-Hexen(2), n-Hexen(3), Isopentene, Isohexene, n- und iso-Heptene, n- und iso-Octene, n- und iso-Nonene, n- und iso-Decene, n- und iso-Dodecene, Isobutylen, 2-Methyl-buten(1), 3-Methyl-buten(1), n-Hepten(1), n-Octen(1), Allylchlorid, Allylbromid, und dergleichen; cis- oder trans-Di- und Polyolefine, beispielsweise Di- und Triolefine mit 4 bis 12 Kohlenstoffatomen. Diese Verbindungen können durch andere Substituenten substituiert sein, beispielsweise durch Alkylgruppen mit 1 bis 6 Kohlenstoffatomen, Halogenatome, C≡N-Gruppen, Carbonylgruppen, Carboxylgruppen, Hydroxygruppen, und dergleichen. Zu Beispielen für diese Art von Verbindungen gehören Butadien(1,3), 2,3-Dimethylbutadien(1,3), Pentadiene, Hexadiene, Hexatrien, Dodecatriene, und dergleichen.

Zu Beispielen für geeignete Alkine gehören diejenigen mit 2 bis 12 Kohlenstoffatomen, beispielsweise Acetylen, Methylacetylen, Äthylacetylen, Dimethylacetylen, Pentin(1), Pentin(2), 3-Methylbutin(1), Hexin(1), Hexin(2), Hexin(3), 3,3-Dimethylbutin(1), und dergleichen. Wie im Falle der zuvor besprochenen Olefine können auch die Alkine durch geeignete funktionelle Gruppen substituiert sein, beispielsweise durch Carboxylgruppen, beispielsweise Acetylendicarbonsäure, Hydroxygruppen, Halogene, Alkylgruppen mit 1 bis 6 Kohlenstoffatomen, und dergleichen.

Geeignete cyclische Diene sind beispielsweise das 1,3-Cyclohexadien, 1,4-Cyclohexadien, und die Cyclooctadiene, insbesondere das 1,3-Cyclooctadien und das 1,5-Cyclooctadien.

Geeignete Liganden sind auch Phosphorylide, z.B. Methylentriphenylphosphoran, wobei die Wasserstoffatome der Methylengruppe durch aliphatische oder aromatische Reste, insbesondere durch $C_1$ bis $C_6$-Alkyl, Phenyl, Benzyl, substituiert sein können oder die Methylengruppierung Bestandteil eines alicyclischen Ringsystems sein kann.

Im allgemeinen kann man feststellen, daß die Selektivität mit zunehmender Raumerfüllung der Liganden zunimmt. So wurde gefunden, daß die Selektivität bei Verwendung von Benzonitril als Ligand nicht allzu groß war, jedoch bei Verwendung von Naphthonitril deutlich zunahm und bei Verwendung von Cyanoanthracen bereits sehr stark war.

Eine ähnliche Beobachtung kann man bei den Aminen machen, z.B. ist die Selektivität von 1,1-Diphenyläthylamin deutlich größer als die bei Verwendung von 1-Phenyläthylamin als Ligand, obwohl auch letztere Verbindung bereits eine ausgeprägte Selektivitätssteigerung bewirkt.

Die Nachteile der bekannten Fett-Hydrierverfahren liegen darin, daß die erwünschten ungesättigten cis-Fettsäureester weitgehend durchhydriert werden. Ferner erfolgt zum größten Teil eine Isomerisierung zu den weniger erwünschten trans-Verbindungen.

Im Gegensatz zu diesen bekannten Fett-Hydrierverfahren haben die erfindungsgemäßen Katalysatoren den Vorteil, daß sie bei der Verwendung für die Fett-Hydrierung die Möglichkeit eröffnen, von mehrfach ungesättigten Fettresten selektiv nur eine Doppelbindung oder zwei Doppelbindungen zu hydrieren. Dabei bleibt die cis-Konfiguration des naturlichen Ausgangsmaterials weitgehend und häufig vollständig erhalten und es findet praktisch keine Doppelbindungsisomerisierung, d.h. keine Verschiebung der Doppelbindungen statt. Aus dem zuvor Gesagten ergibt sich bereits, daß die für die bekannten Hydrierverfahren typische Durchhydrierung zu vollständig gesättigten Fetten mit den erfindungsgemäßen Katalysatoren vermieden wird und die partielle Hydrierung auf der gewünschten Teilhydrierungsstufe festgehalten werden kann.

Die erfindungsgemäßen Hydrierkatalysatoren können dadurch hergestellt werden, daß man Polyvinylalkohol mit einem Molekulargewicht von 72 000, Polyvinylpyrrolidon mit einem Molekulargewicht von 200 000, Polyacrylnitril, Carboxymethylcellulose, Polyvinylpyridin und/oder Mischungen davon mit Metallen, Metallkomplexen oder Metallsalzen der 8. Nebengruppe des Periodensystems in Wasser, Methanol, Äthanol, Propanol, N-Methylpyrrolidon oder Mischungen davon umsetzt und gewünschtenfalls anschließend hydriert.

Gewünschtenfalls kann man die Lösung des Katalysators dann entweder direkt oder nach Abtrennung niedermolekularer Ausgangs- und Reaktionsprodukte als Hydrierkatalysator verwenden.

Man kann die so dargestellten Katalysatoren erfindungsgemäß durch Diafiltration von niedermolekularen Komponenten abtrennen und reinigen und ohne Isolierung in Lösung für Hydrierungen benutzen. Man kann gewünschtenfalls aber auch die Katalysatoren in Substanz isolieren, indem man ausfällt, umfällt, das Lösungsmittel verdampft oder lyophilisiert. Sämtliche Metalle bzw. Metallionen der 8. Nebengruppe des Periodensystems sind erfindungsgemäß mit Polymeren der oben erwähnten Art umgesetzt worden und als Hydrierkatalysatoren verwendet worden.

Die erfindungsgemäßen polymeren Katalysatoren lassen sich gemäß der Erfindung in breitem Umfang für die katalytische Hydrierung organischer Verbindungen in Wasser oder organischen Lösungsmitteln bei Raumtemperatur oder erhöhten Temperaturen, unter Druck oder bei Normaldruck einsetzen. Die erfindungsgemäßen Katalysatoren können auch in Suspension, z. B. als Emulsion von Fetten bzw. Fettsäuren in Wasser, verwendet werden. So lassen sich Nitro-, Nitroso-, Cyano-Gruppen zu Aminen hydrieren. Erfindungsgemäß hydrieren die Katalysatoren auch Olefine, Acetylene, Aromaten, C=O-, C=N- und N=N-Bindungen. Je nach Metall bzw. Polymer werden erfindungsgemäß für spezifische Hydrierungen geeignete Katalysatoren erhalten. So können je nach der Struktur der polymeren Metallkomplexe gemäß der Erfindung spezifisch C≡C-Dreifachbindungen zu cis- oder trans-Olefinen hydriert werden und in organischen Verbindungen mit mehreren C=C-Doppelbindungen spezifisch einzelne Doppelbindungen mit größerer Geschwindigkeit als andere Doppelbindungen hydriert werden. Die polymeren Hydrierkatalysatoren können erfindungsgemäß wieder verwendet werden und sowohl in diskontinuierlicher als auch in kontinuierlicher Verfahrensweise eingesetzt werden.

Die folgenden Beispiele sollen die Erfindung erläutern, ohne sie zu begrenzen:

Beispiel 1

Darstellung eines Palladiumpolymers in wäßriger Lösung:

25 ml 1%-ige wäßrige Lösung von Polyvinylalkohol (Molekulargewicht 72.000) werden bei Raumtemperatur mit 1 ml wäßriger $PdCl_2$-Suspension (entsprechend 10 mg Pd) versetzt und tropfenweise 0,5 ml 4%-ige, wäßrige $Na_2CO_3$-Lösung zugefügt. Danach wird mit Wasser auf 50 ml aufgefüllt, mit $H_2$ reduziert und 12 Stunden durch eine Membran der Ausschlußgrenze 3.000 bei konstantem Volumen diafiltriert. Die Lösung mit einem Pd-Gehalt von ca. 0,2 mg Pd/ml kann direkt für Hydrierungen eingesetzt werden. Zur Isolierung wird das Retentat lyophilisiert. Ausbeute 0,23 g polymere Palladiumverbindung mit 3,9% Pd.

Nach obiger Vorschrift werden auch polymere Palladiumverbindungen mit Polyvinylpyrrolidinon

(Luviskol K 70, BASF) und Carboxymethylcellulose (Relatin, Henkel) dargestellt. Es werden analog jeweils 25 ml 1%ige Polymerlösungen eingesetzt.

Beispiel 2

Darstellung des Palladiumpolymers in organischen Lösungsmitteln:

Zu 25 ml 1 %iger Lösung von Polyvinylalkohol (M.G. 72.000) in Methanol (oder Propanol) gibt man bei Raumtemperatur 1 ml wässerige Suspension von $PdCl_2$ (Pd-Gehalt: 10 mg). Danach fügt man tropfenweise 1 ml 2 %ige Triethylaminlösung zu, füllt mit Methanol (oder Propanol) auf 50 ml auf, reduziert mit $H_2$ und diafiltriert 24 Stunden Durch eine Polyamidmembran (Ausschlußgrenze 10.000). Das mit Methanol (oder Propanol) auf 50 ml aufgefüllte Retentat enthält ca. 0,2 mg Pd/ml und kann direkt für Hydrierungen eingesetzt werden. Zur Isolierung des Katalysators in Substanz wird das durch Diafiltration von niedermolekularen Verunreinigungen befreite Retentat durch Abziehen des Lösungsmittels zur Trockne verdampft. Ausbeute 0,24 g (Pd-Gehalt 3,8%).

Beispiel 3

Darstellung eines Palladium-Polyvinylpyrrolidinons:

25 ml 1 %ige methanolische Lösung von Polyvinylpyrrolidinon werden mit 38 mg $PdCl_2 \cdot 2\ C_6H_5CN$ bei Raumtemperatur unter Rühren versetzt. Danach fügt man tropfenweise 1 ml 2 %ige methanolische Triethylaminlösung zu, füllt mit Methanol auf 50 ml auf, reduziert mit $H_2$ und diafiltriert 24 Stunden bei konstantem Volumen. Das Retentat kann direkt als Katalysatorlösung für Hydrierungen eingesetzt werden. Zur Isolierung in Substanz wird das Retentat zur Trockne eingedampft. Ausbeute 0.22 g (Pd-Gehalt: 3.95%).

Beispiel 4

Darstellung eines Platin-Polyvinylpyrrolidons:

Nach der Vorschrift in Beispiel 3 werden 25 ml 1 %ige wäßrige Lösung von Polyvinylpyrrolidinon mit 1 ml wäßriger Lösung von $K_2\ [PtCl_4]$ (Platingehalt: 10 mg) umgesetzt. Ausbeute 0.23 g mit Pt-GEhalt von 3.7%.

Beispiel 5

Darstellung eines Rhodium-polyvinylpyrrolidinon:

25 ml wäßrige 1 %ige Lösung von Polyvinylpyrrolidinon werden mit 15 mg $Rh(OH)_3$ umgesetzt und mit Methanol auf 50 ml aufgefüllt und mit $H_2$ reduziert. Danach wird 18 Stunden durch eine Polyamidmembran (Ausschlußgrenze 10.000) diafiltriert bei konstantem Volumen. Das Rhodiumpolymer kann direkt in Lösung für Hydrierungen verwendet werden. Zur Isolierung wird das Retentat im Vakuum zur Trockne eingedampft Ausbeute 2,2 g (Rh-Gehalt: 2,1%)

Beispiel 6

Darstellung eines Ruthenium-Polyvinylpyrrolidinon:

Entsprechend Beispiel 5 werden 15 mg $Ru(OH)_3$ mit 25 ml 1 %iger Polyvinylpyrrolidinlösung umgesetzt. Ausbeute 2.05 g Rutheniumpolyvinylpyrrolidinon mit 3.5% Ru.

Beispiel 7

Darstellung eines Iridium-Polyvinylpyrrolidinon:

25 ml wäßrige Lösung von Polyvinylpyrrolidinon werden entsprechend Beispiel 1 mit 1 ml wäßriger Lösung von $Na_3\ [IrCl_6]$ (10 mg Iridium) umgesetzt. Ausbeute 2.1 g mit Iridiumgehalt 3.5%.

Beispiel 8

Darstellung eines Osmium-Polyvinylpyrrolidinon:

25 ml 1 %ige methanolische Lösung von Polyvinylpyrrolidon werden mit 13 mg Osmiumtetraoxid bei Raumtemperatur versetzt und 30 Minuten Acetylen in die Lösung geleitet. Danach wird auf 50 ml mit Methanol aufgefüllt und bei konstantem Volumen wie üblich diafiltriert. Das Retentat kann direkt für Hydrierungen verwendet werden. Zur Isolierung wird im Vakuum zur Trockne eingedampft. Ausbeute 2,1 g mit Os-Gehalt von 4,0 g.

Beispiel 9

Darstellung einer Polyacrylnitril-Palladiumverbindung in situ und Verwendung zur selektiven Hydrierung von Alkinen zu Alkenen:

25 ml einer 1 %igen Lösung von linearem Polyacrylnitril (Molgewicht: $10^6$) in N-Methylpyrrolidon (NMP) werden mit 17 mg festem $PdCl_2$ bei Raumtemperatur versetzt, 1 ml 2 %ige Lösung von Triethylamin in NMP zugegeben und mit NMP auf 50 ml aufgefüllt.

Von dieser Lösung werden 10 ml in ein Hydriergefäß gegeben, dreimal mit $H_2$ gespült und unter $H_2$ 12 Stunden gerührt. Danach gibt man 1 mMol Pentin-(2) zu und hydriert bei Raumtemperatur und 1 bar. Nach 20—60 Minuten werden durch gaschromatographische Analyse 96% cis-Penten-(2) neben 2% trans-Penten-(2) und 2% n-Pentan bestimmt.

Beispiel 10

Darstellung eines Polyacrylnitril-Palladium-triphenylphosphins in situ und Verwendung zur selektiven Hydrierung von Alkinen zu Alkenen:

Entsprechend Beispiel 9 werden 50 ml Lösung des Polyacrylnitril-Palladium-Komplexes dargestellt. Zur Lösung fügt man 10.5 mg Triphenylphosphin.

10 ml der Lösung werden nach der Vorschrift in Beispiel 9 vorhydriert. Dann wird 1 mMol Pentin(—1) zugegeben und hydriert. Nach 20—60 Minuten werden gaschromatographisch 97% Ausbeute Penten-1 und 3% n-Pentan bestimmt. Nach Abtrennung des Reaktionsgemisches durch Destillation oder Ultrafiltration kann der Katalysator wieder verwendet werden.

Beispiel 11

Hydrierung von Nitroverbindungen mit polymeren Katalysatoren:

Für die Hydrierungen werden nach unten angegebener Vorschrift je 5 ml der nach den Beispielen 1, 2, 3 oder 4 dargestellten Katalysatorlösungen verwendet.

5 ml in situ dargestellte Katalysatorlösung werden mit 30 ml dest. $H_2O$ verdünnt, dreimal mit $H_2$ gespült und 30 Minuten unter $H_2$ unter Rühren vorhydriert. Man gibt 1 mMol p-Nitrophenol zu und hydriert bei Raumtemperatur und 1 bar. Danach filtriert man bei konstantem Volumen und 2 bar durch eine Polysulfonmembran der Ausschlußgrenze 10.000. Im Filtrat wird p-Aminophenol in 95% Ausbeute erhalten. Die Hydrierzeit schwankt je nach polymerem Katalysator zwischen 20—120 Minuten. Das Retentat enthält den Katalysator, der für Hydrierungen wiederverwendet werden kann.

Beispiel 12

Hydrierung von Aromaten zu Cycloaliphaten mit polymeren Rhodium-, Ruthenium- und Iridiumverbindungen:

5 ml der nach Beispiel 5, 6 oder 7 dargestellen polymeren Katalysatorlösung werden im Hydrierkolben mit 30 ml dest. $H_2O$ verdünnt, dreimal mit Wasserstoff gespült und 24 Stunden bei 60°C unter Rühren vorhydriert. Man gibt 1 mMol p-Nitrophenol zu und hydriert bei Raumtemperatur und 1 bar. Die Hydrierung dauert je nach Polymer 20 Minuten bis 4 Stunden. Ausbeute an 4-Aminocyclohexanol: 85—90%.

Beispiel 13

Hydrierung von Maleinsäure zu Bernsteinsäure:

5 ml der nach Beispiel 2 dargestellten polymeren Katalysator-Lösung werden mit 12.5 ml Methanol und 7.5 ml dest. Wasser versetzt und in einem Hydriergefäß dreimal mit $H_2$ gespült. Dann wird 30 Minuten unter $H_2$ voraktiviert, 1 mMol Maleinsäure zugesetzt und 2 Stunden bei 20°C und 1 bar hydriert. Das Reaktionsgemisch wird durch eine Membran der Ausschlußgrenze 10.000 filtriert. Im Filtrat ist reine Bernsteinsäure in 97% Ausbeute enthalten.

Beispiel 14

Hydrierung von ungesättigten zu gesättigten Fettsäuren:

10 ml der nach Beispiel 2 dargestellten Katalysatorlösung werden mit 30 ml Methanol verdünnt, im Hydriergefäß dreimal mit $H_2$ gespült und 30 Minuten unter $H_2$ voraktiviert. Danach gibt man 1 mMol Linolsäure zu und hydriert 20 Minuten. Nach der Diafiltration erhält man im Filtrat reine Stearinsäure in 94% Ausbeute.

Unter gleichen Bedingungen werden auch andere ungesättigte Fettsäuren hydriert, z.B. Ölsäure zu Stearinsäure.

Beispiel 15

Hydrierung von Alkenen und Alkinen zu Alkanen:

Die Hydrierung wird analog Beispiel 13 mit 1 mMol Cyclohexen, Pentin oder Hexin-2 durchgeführt. Die Hydrierung ist in 20 Minuten beendet. Es entstehen Cyclohexan, n-Pentan oder n-Hexan in quantitativer Ausbeute.

Beispiel 15a

Hydrogenolytische Spaltung von Benzylestern:

10 ml der nach Beispiel 2 dargestellten Katalysatorlösung werden mit 20 ml Methanol und 20 ml Wasser verdünnt, im Hydriergefäß dreimal mit $H_2$ gespült und 30 Minuten unter Rühren mit $H_2$ voraktiviert. Danach gibt man 1 g des an Polyethylenglykol (PEG) über eine Benzylestergruppe gebundenen Polymerpeptids

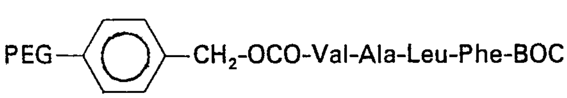

zu und hydriert 25 Minuten. Danach wird über eine Membran der Ausschlußgrenze 10.000 diafiltriert. Das Peptid wird durch Gefriertrocknen in 98% Ausbeute aus dem Filtrat erhalten.

Beispiel 16

5,5 mg $PdCl_2 \times 2$ (9-Cyano-Anthracen) (≙1 mg Pd) werden in 0.5 ml N-Methylpyrrolidon gelöst, mit 40 ml einer 1 %-igen Lösung von Polyvinylpyrrolidon (Molekulargewicht etwa 200 000) in n-Propanol verdünnt und nach Zusatz von 0,25 ml 2 %-igem Triäthylamin in n-Propanol mit Wasserstoff reduziert. In die sich im Verlauf einer Stunde dunkelbraun färbende Lösung pipettiert man unter Luftausschluß 5 ml Leinöl und hydriert dieses unter Rühren bei Raumtemperatur und einem Wasserstoffdruck von 1 bar. Nach Aufnahme von 200 ml Wasserstoff (Dauer 104 Min.) unterbricht man die Hydrierung. Das Lösungsmittel wird abrotiert und aus dem Rückstand das entstandene hydrierte Öl mit Petroläther extrahiert. Nach Verdampfen des Petroläthers wird das erhaltene hydrierte Öl mit alkoholischer Kalilauge verseift. Die entstandenen Fettsäuren werden mit Diazomethan verestert und gaschromatographisch analysiert. Der in Petroläther unlösliche polymere Katalysator löst sich wieder in n-Propanol und kann zur erneuten Hydrierung verwandt werden (vgl. Tabelle II).

Beispiel 17

4,6 mg $PdCl_2 \times 2$ β-Naphthonitril (≙1 mg Pd) werden anstelle des im Beispiel 16 verwandten Cyano-Anthracenkomplexes eingewogen und sonst wie im vorhergehenden Beispiel beschrieben, weiterbehandelt (vgl. Tabelle I).

Beispiel 18

Die im Beispiel 16 beschriebene Arbeitsweise wird wiederholt wobei diesmal 4,0 mg $PdCl_2 \times 2$ (1-Phenyläthylamin) (≙1 mg Pd) anstelle des Cyanoanthracenkomplexes eingewogen werden (vgl. Tabelle III).

Beispiel 19

5,4 mg $PdCl_2 \times 2$ (1,1-Diphenyläthylamin) werden in 0,5 ml N-Methylpyrrolidon gelöst, mit 40 ml 1 %-iger Polyvinylpyrrolidonlösung (Molekulargewicht etwa 200 000) verdünnt und nach Zusatz von 0,25 ml Triäthylamin-n-propanollösung mit Wasserstoff bei Raumtemperatur reduziert. Nach 1 Stunde pipettiert man unter Luftausschluß 5 ml Leinöl in die Lösung und hydriert bis die Wasserstoffaufnahme zum Stillstand kommt (etwa nach 250 ml). Die Lösung wird ultrafiltriert, das Filtrat eingeengt, die verbleibenden hydrierten Öle verseift, mit Diazomethan verestert und gaschromatographisch analysiert. Das Retentat wird mit n-Propanol verdünnt und kann zur weiteren Hydrierung eingesetzt werden (vgl. Tabelle IV).

Beispiel 20

Arbeitsweise wie in Beispiel 16, jedoch wird anstelle von Polyvinylpyrrolidon Polyvinylpyridin als Polymer verwendet.

Beispiel 21

Arbeitsweise wie Beispiel 16. Als zu hydrierendes Öl wird Linolensäuremethylester verwendet.

TABELLE I

Hydrierung von 5 g Leinöl mit $PdCl_2 \times 2R$—PVP in n-Propanol

| ml $H_2$-Aufnahme | Linolensäure in % | Linolsäure in % | Ölsäure in % | Stearinsäure in % | Palmitinsäure in % | Reaktionszeit in min. |
|---|---|---|---|---|---|---|
| 0 | 46 | 19 | 23 | 5 | 7 | 0 |
| 100 | 19 | 30 | 37 | 6 | 8 | 50 |
| 150 | 3 | 31 | 52 | 5 | 7 | 75 |
| 200 | 0 | 5 | 77 | 9 | 9 | 100 |

R=β-Naphthonitril
PVP=Polyvinylpyrrolidon

TABELLE II

Hydrierung von 5 g Leinöl mit $PdCl_2 \times 2R$—PVP in n-Propanol

| ml $H_2$-Aufnahme | Linolensäure in % | Linolsäure in % | Ölsäure in % | Stearinsäure in % | Palmitinsäure in % | Reaktionszeit in min. |
|---|---|---|---|---|---|---|
| 0 | 46 | 19 | 23 | 5 | 7 | 0 |
| 100 | 19 | 27 | 40 | 6 | 8 | 52 |
| 150 | 10 | 30 | 48 | 4 | 8 | 78 |
| 200 | 0 | 22 | 65 | 5 | 8 | 104 |

R=9-Cyano-Anthracen
PVP=Polyvinylpyrrolidon

TABELLE III
Hydrierung von 5 g Leinöl mit $PdCl_2 \times 2R$—PVP in n-Propanol

| ml $H_2$-Aufnahme | Linolensäure in % | Linolsäure in % | Ölsäure in % | Stearinsäure in % | Palmitinsäure in % | Reaktionszeit in min. |
|---|---|---|---|---|---|---|
| 0 | 46 | 19 | 23 | 5 | 7 | — |
| 100 | 18 | 22 | 43 | 8 | 9 | 40 |
| 150 | 14 | 25 | 45 | 8 | 8 | 60 |
| 200 | 3 | 20 | 59 | 9 | 9 | 85 |

R=1-Phenyl-äthyl-amin
PVP=Polyvinylpyrrolidon

TABELLE IV
Hydrierung von 5 g Leinöl mit $PdCl_2 \times 2R$—PVP in n-Propanol

| ml $H_2$-Aufnahme | Linolensäure in % | Linolsäure in % | Ölsäure in % | Stearinsäure in % | Palmitinsäure in % | Reaktionszeit in min. |
|---|---|---|---|---|---|---|
| 0 | 46 | 19 | 23 | 5 | 7 | 0 |
| 50 | 34 | 22 | 30 | 6 | 8 | 50 |
| 100 | 25 | 24 | 33 | 9 | 9 | 100 |
| 150 | 18 | 29 | 40 | 6 | 7 | 170 |
| 200 | 0 | 23 | 53 | 15 | 9 | 620 |

R=1,1-Diphenyläthylamin
PVP=Polyvinylpyrrolidon

Aus den obigen Tabellen I bis IV ist ersichtlich, daß bei der Hydrierung von Leinöl, der Anteil der in diesem Ausgangsmaterial vorhandenen gesättigten Fettsäuren, nämlich Stearinsäure und Palmitinsäure praktisch konstant bleibt, während sich der Gehalt der dreifach ungesättigten Linolensäure mit fortschreitender Hydrierung stufenweise verringert und dementsprechend der Gehalt an Linolsäure und Ölsäure zunimmt.

Eine trans-Isomerisierung findet bis zu einer Wasserstoffaufnahme von 100 bis 150 mlentsprechend einem bereits festen Fett—nicht in nennenswertem Maße statt. So wurden beispielsweise bei der Hydrierung gemäß Tabelle IV nach 100 ml $H_2$-Aufnahme nur 11% trans-Isomere und nach 150 ml $H_2$-Aufnahme nur 17% trans-Isomere festgestellt. Nach dem Stand der Technik erfolgt dagegen bei der Hydrierung eine 60 bis 80 %-ige Umwandlung in trans-Isomere.

Die Fetthydrierung mit den erfindungsgemäßen Katalysatorsystemen wird vorzugsweise in niedrigaliphatischen Alkoholen, insbesondere in n-Propanol durchgeführt.

Beispiel 22

Man wiegt 48 mg $NiCl_2 \times 6H_2O$ in ein Sekurierkölbchen ein und löst in 20 ml n-Propanol auf. Eine 2%-ige Lösung von Polyvinylpyrrolidinon in n-Propanol wird zugegeben. Das Kölbchen wird mit einer Hydrierapparatur verbunden, dreimal evakuiert und mit Wasserstoff gespült. Man reduziert mit 10 mg Natriumborhydrid. Dann hydriert man 5 ml Becelöl bei Raumtemperatur und 1 bar Wasserstoffdruck.

Die erhaltenen Ergebnisse sind in der nachstehenden Tabelle V zusammengestellt.

Beispiel 23

Man arbeitet wie in Beispiel 16 beschrieben, wobei jedoch nur 24 mg $NiCl_2 \cdot 6H_2O$ eingewogen werden.

Die hierbei erzielten Ergebnisse sind in der nachstehenden Tabelle VI zusammengestellt.

TABELLE V
Hydrierung von Becel-Öl mit Ni-PVP in n-Propanol

| $H_2$ Aufnahme in ml | Linolsäure in % | Ölsäure in % | Stearinsäure in % | Palmitinsäure in % | Hydrierzeit in min. | Trans in % |
|---|---|---|---|---|---|---|
| 0 | 71 | 18 | 5 | 6 | 0 | 0 |
| 50 | 57 | 32 | 5 | 6 | 18 | 8 |
| 100 | 19 | 70 | 5 | 6 | 36 | 19 |

TABELLE VI
Hydrierung von Becel-Öl mit Ni-PVP in n-Propanol

| $H_2$ Aufnahme in ml | Linolsäure in % | Ölsäure in % | Stearinsäure in % | Palmitinsäure in % | Hydrierzeit in min. | Trans in % |
|---|---|---|---|---|---|---|
| 0 | 71 | 18 | 5 | 6 | 0 | 0 |
| 50 | 48 | 41 | 5 | 6 | 23 | 6 |
| 100 | 25 | 64 | 5 | 6 | 50 | 14 |

**Patentansprüche für die Vertragsstaaten: BE, CH, DE, FR, GB, IT, LU, NL, SE**

1. Polymere, in Wasser, Methanol, Äthanol, Propanol, N-Methylpyrrolidon und Mischungen davon lösliche Hydrierkatalysatoren, dadurch gekennzeichnet, daß Metalle der 8. Nebengruppe des Periodensystems der Elemente als Metall oder Metallsalz an Polyvinylalkohol mit einem Molekulargewicht von 72 000, Polyvinylpyrrolidon mit einem Molekulargewicht von 200 000, Polyacrylnitril, Carboxymethylcellulose, Polyvinylpyridin und/oder Mischungen davon kovalent und/oder nebenvalent gebunden sind.

2. Katalysatoren nach Anspruch 1, dadurch gekennzeichnet, daß sie auch niedermolekulare Liganden enthalten.

3. Katalysatoren nach Anspruch 2, dadurch gekennzeichnet, daß es sich bei den niedermolekularen Liganden um Phosphine, Kohlenmonoxid, Halogenide, Cyanide, Nitrile, Alkene, Alkine, Amine, Aminosäuren und/oder Phosphorylide handelt.

4. Katalysatoren nach einem der Ansprüche 1 bis 3, dadurch gekennzeichnet, daß das Metall nullwertiges Palladium oder ein Palladiumsalz ist.

5. Katalysatoren nach den Ansprüchen 3 und 4, dadurch gekennzeichnet, daß der niedermolekulare ligand ein primäres, sekundäres oder tertiäres Amin mit raumerfüllenden aliphatischen, alicyclischen oder aromatischen Substituenten ist.

6. Verfahren zur Herstellung der polymeren Hydrierkatalysatoren nach einem der vorhergehenden Ansprüche, dadurch gekennzeichnet, daß die in Anspruch 1 genannten Polymere mit Metallen, Metallkomplexen oder Metallsalzen der 8. Nebengruppe des Periodensystems in Wasser, Methanol, Äthanol, Propanol, N-Methylpyrrolidon oder Mischungen davon umgesetzt, gewünschtenfalls anschließend hydriert und gewünschtenfalls der Katalysator von niedermolekularen Ausgangs- und Reaktionsprodukten abgetrennt werden.

7. Verfahren nach Anspruch 6, dadurch gekennzeichnet, daß man den Katalysator durch Membranfiltration abtrennt.

8. Verwendung der Katalysatoren der Ansprüche 1 bis 5 zur katalytischen Hydrierung von organischen Verbindungen in Lösung.

9. Verwendung nach Anspruch 8 zur katalytischen Hydrierung von Nitro- und Nitrosoverbindungen zu Aminen, von substituierten oder unsubstituierten Alkinen und Alkenen zu Alkanen, von substituierten oder unsubstituierten Cycloolefinen oder Aromaten zu Cycloaliphaten, zur hydrogenolytischen Spaltung von Äther- und Esterbindungen, zur selektiven Hydrierung von Alkinen zu cis- oder trans-Alkenen, zur selektiven Hydrierung einer oder mehrerer Doppelbindungen in Polyolefinen oder mehrfach ungesättigten Säuren, Alkoholen, Ketonen und Fetten.

**Patentansprüche für den Vertragsstaat: AT**

1. Verfahren zur Herstellung von polymeren, in Wasser, Methanol, Äthanol, Propanol, N-Methylpyrrolidon und Mischungen davon löslichen Hydrierkatalysatoren, bei denen Metalle der 8. Nebengruppe des Periodensystems der Elemente als Metall oder Metallsalz an Polyvinylalkohol mit einem Molekulargewicht von 72 000, Polyvinylpyrrolidon mit einem Molekulargewicht von 200 000, Polyacrylnitril, Carboxymethylcellulose, Polyvinylpyridin und/oder Mischungen davon kovalent und/oder nebenvalent gebunden sind, dadurch gekennzeichnet, daß man die genannten Polymeren mit Metallen, Metallkomplexen oder Metallsalzen der 8. Nebengruppe des Periodensystems in Wasser, Methanol, Äthanol, Propanol, N-Methylpyrrolidon oder Mischungen davon, umsetzt, gegewünschtenfalls anschließend hydriert und gewünschtenfalls den Katalysator von niedermolekularen Ausgangs- und Reaktionsprodukten abtrennt.

2. Verfahren nach Anspruch 1, dadurch gekennzeichnet, daß man auch niedermolekulare Liganden verwendet.

3. Verfahren nach Anspruch 2, dadurch gekennzeichnet, daß es sich bei den niedermolekularen Liganden um Phosphine, Kohlenmonoxid, Halogenide, Cyanide, Nitrile, Alkene, Alkine, Amine, Aminosäuren und/oder Phosphorylide handelt.

4. Verfahren nach einem der Ansprüche 1 bis 3, dadurch gekennzeichnet, daß das Metall nullwertiges Palladium oder ein Palladiumsalz ist.

5. Verfahren nach den Ansprüchen 3 und 4, dadurch gekennzeichnet, daß der niedermolekulare

Ligand ein primäres, sekundäres oder tertiäres Amin mit raumerfüllenden aliphatischen, alicyclischen oder aromatischen Substituenten ist.

6. Verfahren nach einem der Ansprüche 1 bis 5, dadurch gekennzeichnet, daß man den Katalysator durch Membranfiltration abtrennt.

7. Verwendung der nach einem Verfahren der Ansprüche 1 bis 6 hergestellten Katalysatoren zur katalytischen Hydrierung von organischen Verbindungen in Lösung.

8. Verwendung nach Anspruch 7 zur katalytischen Hydrierung von Nitro- und Nitrosoverbindungen zu Aminen, von substituierten oder unsubstituierten Alkinen und Alkenen zu Alkanen, von substituierten oder unsubstituierten Cycloolefinen oder Aromaten zu Cycloaliphaten, zur hydrogenolytischen Spaltung von Äther- und Esterbindungen, zur selektiven Hydrierung von Alkinen zu cis- oder trans-Alkenen, zur selektiven Hydrierung einer oder mehrerer Doppelbindungen in Polyolefinen oder mehrfach ungesättigten Säuren, Alkoholen, Ketonen und Fetten.

**Revendications pour les Etats contractants: BE, CH, DE, FR, GB, IT, LU, NL, SE**

1. Polymères comme catalyseurs d'hydrogénation solubles dans l'eau, le méthanol, l'éthanol, le propanol, le N-méthylpyrrolydone et les mélanges desdites substances, caractérisés en ce que des métaux du 8ème sous-groupe de la classification périodique des éléments, sous forme de métal ou de sel métallique, sont liés par covalence et/ou par valence secondaire, à un alcool polyvinylique d'un poids moléculaire de 72.000, à une polyvinylpyrrolidone d'un poids moléculaire de 200.000, à un polyacrylonitrile, une carboxyméthylcellulose, une polyvinylpyridine et/ou à des mélanges de ceux-ci.

2. Catalyseurs selon la revendication 1, caractérisés en ce qu'ils contiennent également des ligands de bas poids moléculaire.

3. Catalyseurs selon la revendication 2, caractérisés en ce que les ligands de bas poids moléculaire sont des phosphines, de l'oxide de carbone, des halogénures, des cyanures, des nitriles, des alcènes, des alcynes, des amines, des acides aminés et/ou des ylides de phosphore.

4. Catalyseurs selon l'une des revendications 1 à 3, caractérisés en ce que le métal est le palladium métallique ou un sel de palladium.

5. Catalyseurs selon l'une des revendications 3 et 4, caractérisés en ce que le ligand de faible poids moléculaire est une amine primaire, secondaire ou tertiaire contenant des substituants aliphatiques, alicycliques ou aromatiques volumineux.

6. Procédé de fabrication des catalyseurs d'hydrogénation polymères selon l'une des revendications précédentes, caractérisé en ce que l'on fait réagir les polymères cités dans la revendication 1 avec des métaux, des complexes métalliques ou des sels métalliques du 8ème sous-groupe de la Classification périodique, dans l'eau, le méthanol, l'ethanol, le propanol, la N-méthylpyrrolidone ou leurs mélanges, que l'on effectue ensuite, le cas échéant, une hydrogénation, et que, le cas échéant, on sépare le catalyseur des produits de départ et produits réactionnels de faible poids moléculaire.

7. Procédé selon la revendication 6, caractérisé en ce qu'on sépare le catalyseur par filtration à l'aide d'une membrane.

8. Utilisation des catalyseurs selon les revendications 1 à 5 pour l'hydrogénation catalytique de composés organiques en solution.

9. Utilisation selon la revendication 8 pour l'hydrogénation catalytique de composés nitro- et nitroso en amines, d'alcènes et d'alcynes substitués ou non substitués en alcanes, de cyclooléfines ou de produits aromatiques substitués ou non substitués en produits cycloaliphatiques, pour l'hydrogénolyse des liaisons éther et ester, pour l'hydrogénation sélective d'alkynes en cis-ou trans- alcènes, pour l'hydrogénation sélective d'une ou plusieurs doubles liaisons de polyoléfines on d'acides, alcools, cétones et corps gras polyinsaturés.

**Revendications pour Etat contractant: AT**

1. Procédé de fabrication des catalysateurs d'hydrogénation polymères solubles dans l'eau, le méthanol, l'éthanol, le propanol, la N-méthylpyrrolydone et les mélanges desdites substances, chez lesquelles des métaux du 8ème sousgroupe de la classification périodique des éléments, sous forme de métal ou de sel métallique, sont liés par covalence et/ou par valence secondaire, à un alcool polyvinylique d'un poids moléculaire de 72 000, à une polyvinylpyrrolidone d'un poids moléculaire de 200 000, à un polyacrylonitrile, une carboxymèthylcellulose, une polyvinylpyridine et/ou à des mélanges de ceux-ci, caractérisé en ce que l'on fait réagier les polymères cités ci-dessus avec des métaux, des complexes métalliques ou des sels métalliques du 8ème sous-groupe de la Classification périodique, dans l'eau, le méthanol, l'éthanol, le propanol, la N-méthylpyrrolidone ou leurs mélanges, que l'on effectue ensuite, le cas échéant, une hydrogénation, et que, le cas échéant, on sépare le catalyseur des produits de départ et produits réactionnels de faible poids moléculaire.

2. Procédé selon la revendication 1, caractérisé en ce que l'on utilise également des ligands de basse poids moléculaire.

3. Procédé selon la revendication 1, caractérisés en ce que les ligands de bas poids moléculaire

sont des phosphines, de l'oxyde de carbone, des halogénures, des cyanures, des nitriles, des alcènes, des alcynes, des amines, des acides aminés et/ou des ylides de phosphore.

4. Procédé selon l'une des revendications 1 à 3, charactérisé en ce que le métal est le palladium métallique ou un sel de palladium.

5. Procédé selon l'une des revendications 3 et 4, charactérisés en ce que le ligand de faible poids moléculaire est une amine primaire, secondaire ou tertiaire contenant des substituants aliphatiques, alicycliques ou aromatiques volumineux.

6. Procédé selon une des revendications 1 à 5, charactérisé en ce qu'on sépare le catalysateur par filtration à l'aide d'une membrane.

7. Utilisation des catalysateurs 1 à 6 pour l'hydrogénation catalytique de composés organiques en solution.

8. Utilisation selon la revendication 7 pour l'hydrogénation catalytique de composés nitro- et nitroso en amines, d'alcènes et d'alcynes substitués ou non substitués en alcanes, de cyclooléfines ou de produits aromatiques substitués ou non substitués en produits cycloaliphatiques, pour l'hydrogénolyse des liaisons éther et ester, pour l'hydrogénation sélective d'alkynes en cis- ou trans- alcènes, pour l'hydrogénation sélective d'une ou plusieurs doubles liaisons de polyoléfines ou d'acides, alcools, cétones et corps gras polyinsaturés.

**Claims for the contracting states: BE, CH, DE, FR, GB, IT, LU, NL, SE**

1. Polymeric hydrogenation catalysts which are soluble in water, methanol, ethanol, propanol, N-methylpyrrolidone and mixtures thereof, characterized in that metals of the eighth subgroup of the periodic system are bound as metal or metal salt by covalent or secondary valent bonds to polyvinyl alcohol having a molecular weight of 72 000, polyvinyl pyrrolidone having a molecular weight of 200 000, polyacrylonitrile, carboxymethylcellulose, polyvinylpyridine and/or mixtures thereof.

2. Catalysts according to claim 1, characterized in that they also contain low molecular ligands.

3. Catalysts according to claim 2, characterized in that the low molecular ligands are phosphines, carbon monoxide, halides, cyanides, nitriles, alkenes, alkines, amines, amino acids and/or phosphorylides.

4. Catalysts according to one of claims 1 to 3, characterized in that the metal is zero-valent palladium or a palladium salt.

5. Catalysts according to claims 3 and 4, characterized in that the low molecular ligand is a primary, secondary or tertiary amine having bulky aliphatic, alicyclic or aromatic substituents.

6. A process for preparing the polymeric hydrogenation catalysts according to anyone of the preceding claims characterized in that the polymers mentioned in claim 1 are reacted with metals, metal complexes or metal salts of the eighth subgroup of the periodic system in water, methanol, ethanol, propanol, N-methyl pyrrolidone or mixtures thereof, if desired, subsequently hydrogenated and, if desired, the catalyst is separated of low molecular starting products and reaction products.

7. Process according to claim 6, characterized in that the catalyst is separated by membrane filtration.

8. Use of the catalysts according to claims 1 to 5 for the catalytic hydrogenation of organic compounds in solution.

9. Use according to claim 8 for the catalytic hydrogenation of nitro and nitroso compounds to amines, of substituted or unsubstituted alkines and alkenes to alkanes, of substituted or unsubstituted cycloolefines or aromatic compounds to cycloaliphatic compounds, for the hydrogenolytic cleavage of ether and ester bonds, for the selective hydrogenation of alkines to cis- or trans-alkenes, for the selective hydrogenation of one or more double bonds in polyolefines or multiple unsaturated acids, alcohols, ketones and fats.

**Claims for the contracting state: AT**

1. A process for preparing polymeric, in water, methanol, ethanol, propanol, N-methylpyrrolidone and mixtures thereof soluble hydrogenation catalysts in which metals of the eighth subgroup of the periodic system are bound by covalent and/or secondary valent bond as metal or metal salt to a polyvinyl alcohol having a molecular weight of 72 000, polyvinyl pyrrolidone having a molecular weight of 200 000, polyacryl nitrile, carboxy methyl cellulose, polyvinyl pyridine and/or mixtures thereof, characterized in that said polymers are reacted with metals, metal complexes or metal salts of the eighth subgroup of the periodic system in water, methanol, ethanol, propanol, N-methyl pyrrolidone or mixtures thereof, if desired, subsequently hydrogenated and, if desired, the catalyst is separated of low molecular starting products and reaction products.

2. Process according to claim 1, characterized in that also low molecular ligands are used.

3. Process according to claim 2, characterized in that the low molecular ligands are phosphines, carbon monoxide, halides, cyanides, nitriles, alkenes, alkines, amines, amino acids and/or phosphorilydes.

4. Process according to one of claims 1 to 3 characterized in that the metal is zero valent palladium or a palladium salt.

5. Process according to claims 3 and 4, characterized in that the low molecular ligand is a primary, secondary or tertiary amine having bulky aliphatic, alicyclic or aromatic substituents.

6. Process according to one of claims 1 to 5 characterized in that the catalyst is separated by membrane filtration.

7. Use of the hydrogenation catalysts prepared according to one of the processes of claims 1 to 6 for the catalytic hydrogenation of organic compounds in solution.

8. Use according to claim 7 for the catalytic hydrogenation of nitro- and nitroso compounds to amines, of substituted or unsubstituted alkines and alkenes to alkanes, of substituted or unsubstituted cyclo-olefins or aromatic compounds to cycloaliphatic compounds, for the hydrogenolytic cleavage of ether and ester bonds, for the selective hydrogenation of alkines to cis- and trans-alkenes, for the selective hydrogenation of one or more double bonds in polyolefines or multiple unsaturated acids, alcohols, ketones and fats.